# EUROPEAN PATENT SPECIFICATION

(11) **EP 1 626 940 B1**
(45) Date of publication and mention of the grant of the patent: **28.06.2006**
(21) Application number: 03768106.1
(22) Date of filing: 11.11.2003
(51) Int. Cl.: C03C 17/36, H05B 3/84, G02B 5/00

(54) **CONDENSATION-PREVENTING HEATING GLASS AND METHOD FOR THE MANUFACTURE THEREOF**
KONDENSATIONS-VERHINDERNDES HEIZBARES GLAS UND DESSEN HERSTELLUNGSVERFAHREN
VERRE CHAUFFANT EMPECHANT LA CONDENSATION ET PROCEDE DE FABRICATION DE CE VERRE

(30) Priority: 21.05.2003 IT RE20030051
(43) Date of publication of application: 22.02.2006
(73) Proprietor: ASOLA VETRO S.r.l., 46041 ASOLA (IT)
(72) Inventor: PERSEGANI, Paolo, I-46041 Asola (IT)
(74) Representative: Gotra, Stefano
(86) International application number: PCT/IT2003/000732
(87) International publication number: WO 2004/103926

(56) References cited:
- EP-A- 0 303 586
- EP-A- 0 303 587
- EP-A- 1 168 888
- EP-A- 1 331 089

## Description

### TECHNICAL FIELD AND BACKGROUND ART.

The present invention relates to a condensation-preventing heating glass obtained by modifying the geometry of the resistive deposit present on glass and a method for the manufacture thereof.

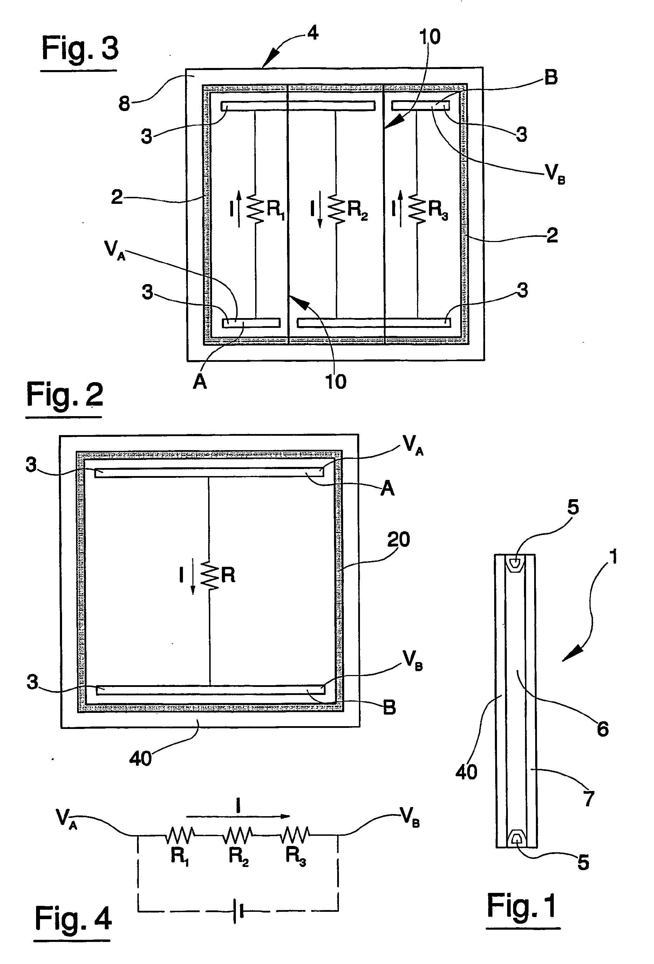

Known glasses are shown in Figures 1 and 2. Such glasses are assembled into a chamber glass 1, which may be double or triple as needed. Said assembly serves mainly the purpose of enhancing thermal insulation and protecting equipment against the electrical currents needed for heating, but does not interfere with the heating of the glass.

It is well known that the current state of the art in the field of heating glasses, e.g. for freezers typically used in bars, pastry shops, supermarkets, provides for the use of glasses characterised by a deposit of semi-transparent metal oxide film which is used as an element that is resistive to the passage of electrical current and which heats the glass itself by the Joule effect. The purpose of such heating is to prevent condensation from forming on the viewing glass of the freezer.

In addition to very precise dimensions, said glasses must also have electrical characteristics that are compatible with the use for which they are required.

Their appearance is that of a monolithic pane of tempered glass, whereon is present a transparent metallic deposit which, when an electrical current flows through it, generates heat.

Moreover, there is an electrically insulating peripheral edge 2 (to prevent the electrical current to reach the edge of the glass pane) and two silver tracks called busbars which serve the purpose of conducting the current.

Said glass panes are used only in the chamber glass and the conducting deposit, for obvious safety reasons, is inside, where an air chamber 6, not in contact with the equipment, is defined.

Such glasses are broadly divided into two categories.

A first category, the first one to reach the market, comprises a pane 4 with a metallic deposit applied onto normal glass panes (not treated) and hence a predetermined final resistance is achieved (within certain tolerances) in order to have a determined dissipation of electrical power, using the standard mains voltage of 220 Volt or another voltage, specifically required. During the manufacturing operations, the insulation edge and the busbars are also created. However, such a pane has high costs because its manufacture requires complex and expensive facilities, and the quantity of pieces involved does not encourage the few manufacturing firms to make any additional investments in technology.

A second category pertains to a glass that is identical in appearance but different in terms of electrical characteristics. The starting point is a glass available on the market, commonly called Pyrolytic Low Emissivity Glass; this was initially created to enhance the thermal insulation of insulating glasses in the construction industry, where greater thermal insulation is required, such as continuous façades, and it is characterised by the presence of a metal coating, which has subsequently been found useful for different applications (e.g. heating). It differs from the previous case because the resistive deposit is not created specifically for this purpose, but is a standard deposit which is applied to the pane when the glass is produced. This causes the specific resistance, i.e. resistance/m² of the glass to be a fixed value and therefore the total resistance of the pane depends on its dimensions. Depending on the dimensions of the glass, the final resistance is obtained which, for various reasons, among them the nature of the deposit itself, is unlikely to be compatible with normal 220 Volt mains voltages. At this point it becomes necessary to use power supplies/transformers that adapt the power supply voltage to obtain the desired power.

The final cost (glass + power supply/transformer) depends on the quantities to be produced and it is not always advantageous with respect to the case described above.

From the above, it will be readily appreciated that current production of heating glasses, particularly for freezers, is quite costly because in the first solution, once a resistive deposit suitable for the dimensions of the glass pane in question (base times height) is designed, the production technology is very expensive and held by a few manufacturing firms in the world (the production of resistive deposits with determined resistance requires very costly facilities in view of the quantities produced).

In the second solution, cost decreases because one starts from a glass that is already available for various uses, for which the insulating edge and the busbars must be created; however, the resistance of such panes, usually very low, entails the need to use power supplies/transformers to adapt power supply voltage and obtain the required power, but this entails higher costs and technical complications that discourage its use.

An additional drawback is given by the substantial impossibility of replacing glasses of the first category with glasses of the second category described above without the aid of a power supply/transformer.

### DISCLOSURE OF THE INVENTION.

The object of the present invention is to eliminate the aforesaid drawbacks and to make available a simpler and more economical heating glass pane.

Said objects are fully achieved by the method and by the glass of the present invention, which are characterised by the contents of the claims set out below.

In particular, the glass provides for the use of a metallic deposit divided into sectors which, depending on the interconnection mode, in particular serial or parallel, allow to vary the final electrical resistance of the glass. The power supplies/transformers can thereby be eliminated, since the resistance of the glass is adapted to the required operating voltage.

The sectors can be formed by grinding, laser etching, chemical erosion and the peripheral insulating edge is obtained the same way.

The busbars can be obtained by silk-screen process.

The method comprises:
- cutting to measure a pyrolytic low emissivity glass having at least a face coated by a resistive deposit;
- possible peripheral grinding with possible definition of an insulating area by grinding;
- positioning a plurality of conductive elements called busbars for the application of a voltage V_{AB};
- tempering;
- possible definition of an insulating area by etchings/removals, if it has not already been provided previously;
- definition of total resistance between two points A and B between which is applied the voltage V_{AB}, by means of etchings/removals of the resistive deposit having thickness preferably of 0.1-1 mm.

### BEST MODE FOR CARRYING OUT THE INVENTION.

These and other characteristics shall become more readily apparent in the following description of a preferred embodiment, illustrated purely by way of non limiting example in the accompanying drawing tables, in which:
- Figures 1 and 2 show respectively a sectioned view and a front view of the heating glass according to the prior art;
- Figure 3 shows a front view of the glass, according to the invention;
- Figure 4 shows the circuit diagram of the invention.

With reference to the figures, the reference number 1 globally designates a chamber glass comprising a support frame 5 for an inner glass 7 and for a heating glass 4 (40 that of the prior art of Figures 1 and 2) between which is defined an air chamber 6, as in the prior art.

The heating glass 4 is, in the case shown in Figure 3 relating to the present invention, , Pyrolytic Low Emissivity Glass, ground along the entire perimeter.

On the surface of the heating glass 4 oriented towards the air chamber 6 is present a resistive deposit 8 distributed uniformly over the entire surface of the glass. This is a commercial glass, already treated with a layer of resistive deposit on a face thereof.

In reality on the surface is obtained, with procedures described below, a peripheral edge 2 (20 in the prior art) where the deposit is absent in order to obtain the necessary electrical insulation. Electrical current distribution takes place by means of a plurality of conductor elements called busbars 3.

Originally the surface of the glass is subjected to removals 10, preferably conducted with laser technique, which etch the resistive deposit, removing it and conferring electrical insulation and a different geometry of the resistive deposit.

The peripheral edge zones 2 lacking resistive deposit can also be obtained by means of etchings/removals 10 with laser technique (aesthetically better), or by means of grinding.

The present invention substantially achieves a final equivalent resistance R equal to the sum of the series resistance of the individual parts of etched glass, as shown in the circuit diagram of Figure 4 which shows the resistors R1, R2, R3 in series, corresponding to the configuration shown in Figure 3 with four connecting busbars and three resistive areas in series.

From the known Ohm's Law, V = IR and hence, if the voltage applied to the ends V_{A}-V_{B} is to be kept constant at 220 V while a certain current I is to flow, the glass pane 4 shall have such removals 10 that R1+R2+R3 = R = (V_{A}-V_{B})/I.

The number n of parts (resistors) into which the deposit is divided (three in the case illustrated herein) and the related number of busbars (four in the illustrated case) depend on the electrical characteristics to be obtained.

As the number of removals 10 increases, the resistors increase and thus so does the final resistance of the glass pane offered to the voltage applied across the ends V_{A} and V_{B}.

Since the glass panes, before the removals, have the same resistance/m², as the size of the pane increases a smaller number of removal becomes necessary.

The final cost of a chamber glass obtained according to the invention is lower than that of a chamber glass obtained with glasses of the two categories described in the prior art.

This is because it does not need the power supply/transformer necessary for the chamber glasses of the second category described above, nor does it need a dedicated metallic deposit, necessary for the first category of prior art described above.

An additional advantage is that the glass according to the present invention can replace those of both categories described above, in existing equipment and freezers, eliminating the transformers/power supplies.

Essentially, the invention provides for etching a commercial glass already fully provided with resistive deposit, rather than using a "normal" glass whereon the resistive deposit is to be applied.

The original manufacturing method comprises:
- cutting to measure a Pyrolytic Low Emissivity Glass having at least a face coated by a resistive deposit;
- possible peripheral grinding with possible definition of an insulating area by grinding;
- positioning a plurality of conductive elements called busbars for the application of a voltage V_{AB};
- tempering;
- possible definition of an insulating area by laser technique, if it has not already been provided previously;
- definition of total resistance between two points A and B between which is applied the voltage V_{AB}, by means of etchings/removals of the resistive deposit having thickness preferably of 0.1-1 mm.

The thickness or width of the etching/removal, which is preferably performed with laser technology, must not be less than 0.1 mm to prevent the formation of dangerous electrical current arcs, and it must not be greater than 1 mm to avoid unpleasant aesthetic effects, i.e. to prevent the etchings from being "visible" to the user who views the products contained in the freezer from its exterior.

## Claims

1. Condensation-preventing heating glass (4), of the kind comprising a layer of resistive deposit (8) on at least a face of the glass itself, **characterised in that** it comprises a plurality of etchings/removals (10) configured in such a way as to provide the glass with a pre-set desired electrical resistance (R).

2. Glass as claimed in claim 1, wherein the etchings/removals (10) divide the resistive deposit (8) into a plurality of mutually connected sectors.

3. Glass as claimed in claim 1, wherein the etchings/removals (10) are such as to define areas each with a different geometry, hence with different resistance and consequently with different degrees of heating on the glass itself.

4. Method for manufacturing a condensation-preventing heating glass, **characterised in that** it comprises the following steps:
- cutting to measure a glass (4) having at least a face coated by a resistive deposit (8);
- possible peripheral grinding and possible definition of an insulating area (2);
- positioning a plurality of conductive elements (3) called busbars for the application of a voltage (V_{AB});
- tempering;
- definition of an insulating area (2), if it has not already been provided previously;
- definition of total resistance between two points/areas (A and B), by means of etchings/removals (10) of the resistive deposit.

5. Method as claimed in claim 4, wherein the etchings/removals (10) of the resistive deposit (8) have a thickness of 0.1-1 mm.

6. Method as claimed in claim 4, wherein the etchings/removals (10) are obtained with laser technology.

7. Method as claimed in claim 4, wherein the etchings/removals are obtained by grinding.

## Patentansprüche

1. Kondensationsverhinderndes heizbares Glas (4), der Art umfassend eine niedergeschlagene Widerstandsschicht (8) auf mindestens einer Seite des Glases, **dadurch gekennzeichnet, dass** es eine Vielzahl von derart ausgebildeten Einschnitten/Ausnehmungen (10) umfasst, dass das Glas einen vorbestimmten erwünschten elektrischen Widerstand (R) erhält.

2. Glas nach Anspruch 1, bei dem die Einschnitte/Ausnehmungen (10) die niedergeschlagene Widerstandsschicht (8) in eine Vielzahl von miteinander verbundenen Bereichen unterteilen.

3. Glas nach Anspruch 1, bei dem die Einschnitte/Ausnehmungen (10) der Art sind, dass sie jeweils Bereiche von verschiedener geometrischer Beschaffenheit an dem Glas ausbilden, die folglich verschiedene Widerstände und daher verschiedene Heizwirkungen aufweisen.

4. Herstellungsverfahren für ein kondensationsverhinderndes heizbares Glas, **dadurch gekennzeichnet, dass** es folgende Schritte umfasst:
- Zuschneiden eines Glases (4) mit mindestens einer Seite, die mit einer niedergeschlagenen Widerstandsschicht (8) beschichtet ist;
- gegebenenfalls Umfangsschleifen und gegebenenfalls Ausbilden eines Isolierbereiches (2);
- Anbringen einer Vielzahl von als Busbars bezeichneten Leiterelementen (3) zum Anlegen einer Spannung (V_{AB});
- Härten;
- sofern nicht bereits erfolgt, Ausbilden eines Isolierbereiches (2);
- Ausbilden eines Gesamtwiderstandes zwischen zwei Punkten/Bereichen (A und B), durch Einschnitte/Ausnehmungen (10) in der niedergeschlagenen Widerstandsschicht.

5. Verfahren nach Anspruch 4, bei dem die Einschnitte/Ausnehmungen (10) der niedergeschlagenen Widerstandsschicht (8) eine Dicke von 0,1-1 mm aufweisen.

6. Verfahren nach Anspruch 4, bei dem die Einschnitte/Ausnehmungen (10) mithilfe von Lasertechnologie ausgebildet werden.

7. Verfahren nach Anspruch 4, bei dem die Einschnitte/Ausnehmungen durch Schleifen ausgebildet werden.

## Revendications

1. Verre chauffant empêchant la condensation (4), du type comprenant une couche de dépôt résistif (8) sur au moins une face du verre lui-même, **caractérisé en ce qu'**il comprend une pluralité d'entailles/enlèvements (10) configurés de manière à pourvoir le verre d'une résistance électrique prédéterminée (R).

2. Verre selon la revendication 1, dans lequel les entailles/enlèvements (10) divisent le dépôt résistif (8) en une pluralité de secteurs connectés entre eux.

3. Verre selon la revendication 1, dans lequel les entailles/enlèvements (10) sont tels qu'ils définissent des zones ayant chacune une géométrie différente, et donc une résistance différentes, et en conséquence des degrés de chauffage différents sur le verre lui-même.

4. Procédé de fabrication d'un verre chauffant empêchant la condensation, **caractérisé en ce qu'**il comprend les phases suivantes:
- découpe à la dimension d'un verre (4) ayant au moins une face revêtue d'un dépôt résistif (8);
- possible usinage périphérique et possible définition d'une zone isolante (2);
- positionnement d'une pluralité d'éléments conducteurs (3) appelés bus pour l'application d'une tension (V_{AB});
- trempage;
- définition d'une zone isolante (2), si elle n'a pas été déjà formée auparavant;
- définition d'une résistance totale entre deux points/zones (A et B), au moyen d'entailles/enlèvements (10) dans le dépôt résistif.

5. Procédé selon la revendication 4, dans lequel les entailles/enlèvements (10) du dépôt résistif (8) présentent une épaisseur de 0,1 à 1 mm.

6. Procédé selon la revendication 4, dans lequel les entailles/enlèvements (10) sont obtenus par technologie laser.

7. Procédé selon la revendication 4, dans lequel les entailles/enlèvements sont obtenus par meulage.
